# EUROPÄISCHE PATENTSCHRIFT

(11) **EP 0 659 878 B1**
(45) Veröffentlichungstag und Bekanntmachung des Hinweises auf die Patenterteilung: **25.06.2003**
(21) Anmeldenummer: 94120249.1
(22) Anmeldetag: 20.12.1994
(51) Int. Cl.: C12C 11/02, C12M 1/04, C12N 1/18

(54) **Hefeerntetank**
Yeast harvesting container
Cuve de récolte de levure

(30) Priorität: 20.12.1993 DE 9319614 U
(43) Veröffentlichungstag der Anmeldung: 28.06.1995
(73) Patentinhaber: ANTON STEINECKER ENTWICKLUNGS GmbH & Co., D-85318 Freising (DE)
(72) Erfinder: Redl, Simon, D-84072 Reichertshausen (DE); Walla, Günter, Dr., D-85395 Attenkirchen (DE)
(74) Vertreter: Grünecker, Kinkeldey, Stockmair & Schwanhäusser Anwaltssozietät

(56) Entgegenhaltungen:
- DE-A- 2 010 796
- FR-A- 1 002 533
- FR-A- 1 009 750
- FR-A- 1 152 856
- NL-C- 63 806

## Beschreibung

Die Erfindung betrifft einen Hefeerntetank für die Gewinnung von Hefe für die Bierherstellung mit wenigstens einer eine Mündungsöffnung aufweisenden Zuleitung für die von einem Gärtank kommende Hefe in den Hefetank.

Es ist bekannt, die von einem Gärtank kommende Hefe in einem Hefeerntetank zu sammeln und dort die Hefe von der Gärung auf die Atmung umzustellen, indem man die Kohlesäure entfernt und für eine Luftaufnahme der Hefe sorgt. Es ist auch bekannt, zu diesem Zweck auf dem Weg zwischen Gärtank und Hefeerntetank eine Belüftungsdüse anzuordnen, in der die Hefe mit Sterilluft belüftet wird.

Bei bekannten Hefeerntetanks wird die Hefe entweder tangential in dem Hefeerntetank eingeströmt oder läuft aus der Mündung der Zuleitung in den Tank ein.

Aufgabe der Erfindung ist es, den Zulauf der Hefe in den Hefeerntetank so zu verbessern, daß eine verbesserte Kohlesäureentfernung und eine bessere Luftaufnahme stattfinden kann.

Zur Lösung dieser Aufgabe ist erfindungsgemäß vorgesehen, daß vor der Mündungsöffnung der Zuleitung im Hefeerntetank wenigstens ein Umlenkschirm angeordnet ist.

Durch diese Maßnahme wird die einströmende Hefe gegen einen Umlenkschirm gerichtet, dort umgelenkt und vergrößert dadurch ihre Oberfläche, indem sie flächig in der Art eines Schirms sich ausbreitet und dann im Tank gesammelt wird. Durch diese flächige Ausbreitung entsteht eine große Oberfläche mit dem Vorteil, daß die Kohlesäure sich leichter entfernt und eine bessere Luftaufnahme möglich ist.

Dabei können auch zwei hintereinanderliegende Umlenkschirme, von denen der in Strömungsrichtung erste Schirm eine zentrale Durchgangsöffnung aufweist, angeordnet werden. Wenn mehrere Zuleitungen vorhanden sind, kann auch vor jeder Zuleitung ein Umlenkschirm angeordnet werden.

In vorteilhafter Ausgestaltung der Erfindung ist der Umlenkschirm in der Mittelachse des Hefeerntetanks im oberen Drittel angeordnet. Dadurch ergibt sich zu allen Seiten ein gleichmäßiger Abstand, so daß sich ein zu dieser Mittelachse gleichmäßiger konzentrischer Schirm ausbilden kann.

In weiterer vorteilhafter Ausgestaltung der Erfindung ist der Umlenkschirm sphärisch gekrümmt ausgebildet. Schließlich sieht eine Weiterbildung der Erfindung vor, daß der Umlenkschirm mittels von Flacheisen gebildeten Streben mit dem Ende der Zulauföffnung verbunden ist. Die Verwendung von Flacheisen zum Halten des Schirms im Abstand zu der Mündungsöffnung der Zuleitung sorgt für eine Anbringung, die ein im wesentlichen freies Abströmen der Hefe vom Schirm ermöglicht. In weiterer vorteilhafter Ausgestaltung der Erfindung ist der Umlenkschirm mit dem Flacheisen als Baueinheit ausgebildet, der nachträglich auch in bestehende Hefeerntetanks eingebaut werden kann.

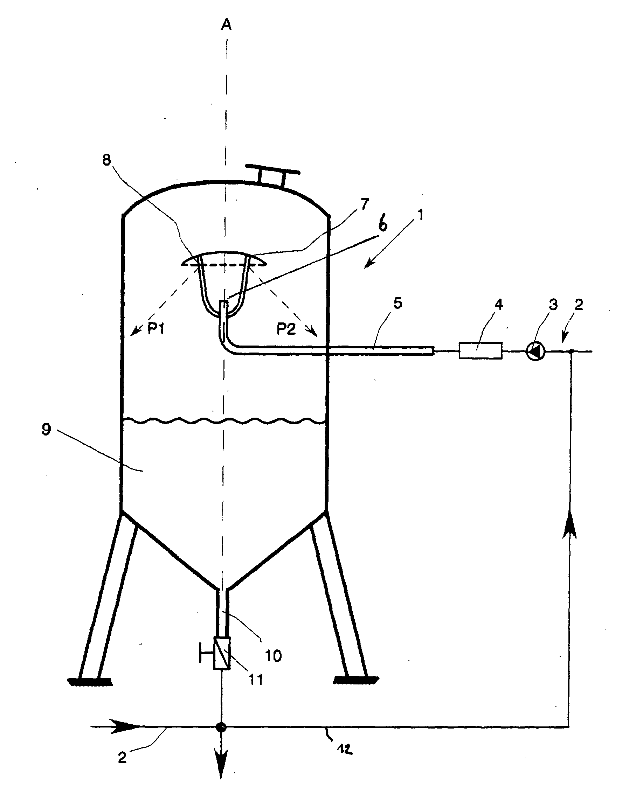

Die Erfindung wird im folgenden anhand des in der Zeichnung dargestellten Ausführungsbeispiels weiter erläutert.

In der Zeichnung ist ein Hefeerntetank dargestellt, der insgesamt mit 1 bezeichnet ist.

Die für die Bierherstellung benötigte Hefe wird von einem nicht dargestellten Gärtank über die Zuführleitung 2 mittels einer Pumpe 3 durch eine Belüftungsdüse 4 befördert und läuft dann über die Zuleitung 5 in den Hefeerntetank 1 ein.

Vor der Mündungsöffnung 6 ist beabstandet ein Umlenkschirm 7 angeordnet, der über Flacheisenstäbe 8 mit dem Ende der Zulaufleitung 5 befestigt ist.

Beim Einströmen der Hefe strömt die Hefe gegen den sphärisch gekrümmten Umlenkschirm 7 und verteilt sich gleichmäßig über 360° entsprechend eines Schirms, wie durch die Pfeile P1 und P2 dargestellt. Durch diese Vergrößerung der Oberfläche ist eine vereinfachte Kohlesäureentfernung und eine bessere Luftaufnahme der Hefe möglich. Die Hefe sammelt sich dann, wie bei 9 dargestellt, und kann dann über die Entnahmeleitung 10 und das dort dargestellte Ventil 11 entnommen werden.

Die Entnahmeleitung und das dort dargestellte Ventil 11 können auch zum Ernten, d.h. Einleiten der Hefe, verwendet werden. Die Hefe ruht dann in dem Hefeerntetank. Wenn die Einlagerung erfolgt ist, kann dann durch Umpumpen unter Entnahme über die Leitung 10, 12 und über den Kreislauf der Zuführleitung 2, der Pumpe 3 sowie der Belüftungsdüse 4 die Kohlesäureentfernung vorgenommen werden.

Die Anbringung des Umlenkschirms am Ende der Zulaufleitung 5 kann so vorgenommen werden, daß der Umlenkschirm nachträglich montiert werden kann bzw. abnehmbar gehalten ist.

## Patentansprüche

1. Hefeerntetank für die Gewinnung von Hefe bei der Bierherstellung mit wenigstens einer eine Mündungsöffnung aufweisenden Zuleitung für die von einem Gärtank kommende Hefe in den Hefeerntetank, **dadurch gekennzeichnet, daß** vor der Mündungsöffnung (6) der Zuleitung (5) im Hefeerntetank (1) ein Umlenkschirm (7) angeordnet ist.

2. Hefeerntetank nach Anspruch 1, **dadurch gekennzeichnet, daß** der Umlenkschirm (7) in der Mittelachse (A) des Hefeerntetanks angeordnet ist.

3. Hefeerntetank nach Anspruch 1 oder 2, **dadurch gekennzeichnet, daß** der Umlenkschirm sphärisch gekrümmt, symmetrisch zur Mittelachse (A) ausgebildet ist.

4. Hefeerntetank nach wenigstens einem der vorangegangenen Ansprüche, **dadurch gekennzeichnet, daß** der Umlenkschirm (7) mittels von Flacheisen (8) gebildeten Streben mit dem Ende der Zulaufleitung (5) verbunden ist.

## Claims

1. Yeast tank for obtaining yeast for brewing, comprising at least one supply pipe with an orifice for supplying yeast fed from a fermenting tank into said yeast tank, **characterized in that** a deflector (7) is arranged in front of said orifice (6) of said supply pipe (5) in said yeast tank (1).

2. A yeast tank according to claim 1, **characterized in that** said deflector (7) is arranged in the center axis (A) of said yeast tank.

3. A yeast tank according to claim 1 or 2, **characterized in that** said deflector is spherically curved and made symmetrical relative to said center axis (A).

4. A yeast tank according to at least one of the preceding claims, **characterized in that** said deflector (7) is connected to the end of said supply pipe (5) by means of struts formed by flat bars (8).

## Revendications

1. Cuve de récolte de levure pour récolter de la levure destinée à la production de bière, comportant au moins une conduite d'alimentation présentant un orifice d'arrivée pour la levure venant de la cuve de fermentation dans la cuve de levure, **caractérisée en ce qu**'au moins un écran déflecteur (7) est disposé dans la cuve de récolte de levure (1) devant l'orifice d'arrivée (6) de la conduite d'alimentation (5).

2. Cuve de récolte de levure selon la revendication 1, **caractérisée en ce que** l'écran déflecteur (7) est disposé dans l'axe central (A) de la cuve de récolte de levure.

3. Cuve de récolte de levure selon la revendication 1 ou 2, **caractérisée en ce que** l'écran déflecteur, cintré en sphère, est disposé de manière symétrique à l'axe central (A).

4. Cuve de récolte de levure selon l'une des revendications précédentes, **caractérisée en ce que** l'écran déflecteur (7) est relié à l'extrémité de la conduite d'alimentation (5) au moyen de jambes de force constituées de fer plat (8).
